# EUROPÄISCHE PATENTSCHRIFT

(11) **EP 1 256 597 B1**
(45) Veröffentlichungstag und Bekanntmachung des Hinweises auf die Patenterteilung: **09.11.2005**
(21) Anmeldenummer: 02005255.1
(22) Anmeldetag: 11.03.2002
(51) Int. Cl.: C08J 5/18, C08K 3/22

(54) **Weisse, biaxal orientierte Folie aus einem kristallisierbaren Thermoplasten mit hohem Weissgrad und mit zusätzlicher Funktionalität**
White, biaxially oriented film made from a crystallizable thermoplastic with high whiteness and with additional functionality
Feuille blanche à orientation biaxialement, à base d' un thermoplastique crystallisable ayant un degré de blancheur élevé et ayant une fontionnalité supplémentaire

(30) Priorität: 15.03.2001 DE 10112493
(43) Veröffentlichungstag der Anmeldung: 13.11.2002
(73) Patentinhaber: Mitsubishi Polyester Film GmbH, 65203 Wiesbaden (DE)
(72) Erfinder: Murschall, Ursula, Dr., 55283 Nierstein (DE); Kern, Ulrich, Dr., 55218 Ingelheim (DE); Oberländer, Klaus, Dipl.-Ing., 65201 Wiesbaden (DE); Kiehne, Thorsten, Dr., 65185 Wiesbaden (DE)
(74) Vertreter: Plate, Jürgen

(56) Entgegenhaltungen:
- EP-A- 0 791 680
- EP-A- 0 942 031
- WO-A-95/10563
- WO-A-96/15906
- US-A- 5 660 931

## Beschreibung

Die Erfindung betrifft eine weiße, biaxial orientierte Folie aus einem kristallisierbaren Thermoplasten mit hohem Weißgrad, deren Dicke im Bereich von 10 bis 500 µm liegt. Sie enthält mindestens ein Titandioxid vom Rutiltyp als Pigment und einen optischen Aufheller in Gegenwart oder Abwesenheit weiterer Zusätze und zeichnet sich durch mindestens eine zusätzliche Funktionalität aus. Der Ausdruck "zusätzliche Funktionalität" beinhaltet die UV-Stabilität, Vergilbungsresistenz, photooxidative Stabilität, flammhemmende Ausrüstung und Siegelfähigkeit. Eine solche Folie kann eine oder mehrere der funktionellen Eigenschaften besitzen. Alle derartigen Folien zeichnen sich durch eine wirtschaftliche Thermoformbarkeit, eine gute Verstreckbarkeit und durch sehr gute optische und mechanische Eigenschaften aus. Die Erfindung betrifft ferner ein Verfahren zur Herstellung dieser Folie und ihre Verwendung.

Weiße Folien mit einer Dicke zwischen 10 und 500 µm sind hinreichend bekannt. Der Weißgrad dieser bekannten Folien liegt in aller Regel bei ≤ 80%. Des weiteren weisen die Folien eine unerwünschte Gelbstichigkeit auf, d.h. die Folien sind nicht strahlend weiß. Beispielsweise liegt der Gelbwert, der dickenabhängig ist, bei 10 bis 100 µm dicken Folien bei > 45.

In der DE-B 23 46 787 ist ein schwerentflammbarer Rohstoff beschrieben. Neben dem Rohstoff ist auch die Verwendung des Rohstoffs zu Folien und Fasern beansprucht. Bei der Herstellung von Folie mit diesem beanspruchten phospholanmodifizierten Rohstoff zeigten sich folgende Defizite: der Rohstoff ist sehr hydrolyseempfindlich und muß sehr gut vorgetrocknet werden. Beim Trocknen des Rohstoffes mit Trocknern, die dem Stand der Technik entsprechen, verklebt der Rohstoff, so daß nur unter schwierigsten Bedingungen eine Folie herstellbar ist. Die unter extremen, unwirtschaftlichen Bedingungen hergestellten Folien verspröden bei Temperaturbelastungen, d. h. die mechanischen Eigenschaften gehen aufgrund der regelrechten Versprödung stark zurück, so daß die Folie unbrauchbar ist. Bereits nach 48 h Temperaturbelastung tritt diese Versprödung auf.

In der US-A 5 660 931 ist eine weiße, biaxial orientierte Polymerfolie mit papierartigen Eigenschaften, verbesserter Antistatik und Bedruckbarkeit offenbart. Für die Herstellung dieser Polymerfolie wird ein Folienrohstoff aus konventionellen, auf Terephthalsäure und Naphthaldicarbonsäure basierenden Polyestern, verwendet. Dem Folienrohstoff werden Titandioxid vom Rutil-Typ, fluoresziernde organische Aufheller und ggf. weitere funktionelle Additive, z. B. thermische Stabilisatoren, beigemengt.

In der WO 96/15906 ist eine zweilagige, weiße, biaxial orientierte Polymerfolie beschrieben, die sich für Metall-Polymer-Laminate zur Herstellung von Dosen eignet. Insbesondere sollen die mit der Polymerfolie ausgerüsteten Laminate den Verschleiß an Dosen-Formwerkzeugen reduzieren. Als Folienrohstoff wird ein Polyethylenterephthalat verwendet, das bevorzugt ein Homopolymer aus 100 mol-% Ethylenterephthalat-Einheiten ist und als Füllstoff Titandioxid vom Rutil- oder Anatas-Typ enthält. Zusätzlich zu dem Titandioxid enthält die Polymerfolie ggf. geringe Mengen an optischen Aufhellern und Farbstoffen.

Die WO 95/10563 lehrt eine matt-weiße Polymerfolie, die eine verbesserte Farbwirkung für Weiß sowie verringerte Gelbstichigkeit aufweist und sich besonders für die Herstellung von Kredit- und Magnetkarten eignet. Diese Polymerfolie besteht bevorzugt aus biaxial orientiertem Polyethylenterephthalat oder Polyethylennaphthalat, das zur Formstabilisierung einer kristallisationsfördernden Wärmebehandlung unterzogen wird. Als Füllstoff dient im wesentlichen Titandioxid vom Rutil- oder Anatas-Typ. Zusätzlich werden der Polymerfolie in geringen Mengen Glimmer und ggf. weitere funktionelle Additive, wie optische Aufheller zugesetzt.

Keine der vom Stand der Technik umfaßten Kenntnisse lehren oder weisen auf eine weiße, biaxial orientierte Thermoplastfolie mit einer Dicke von 10 bis 500 µm hin, die eine wirtschaftliche Thermoformbarkeit und mindestens eine zusätzliche Funktionalität aufweist, deren Eigenschaften während der Verarbeitungs- und Gebrauchsphase beibehalten werden.

Aufgabe der vorliegenden Erfindung ist es, die beschriebenen Nachteile des Standes der Technik zu vermeiden.

Gegenstand der Erfindung ist daher eine weiße, biaxial orientierte Folie mit einer Dicke im Bereich von 10 bis 500 µm, deren Hauptbestandteil mindestens ein kristallisierbarer Thermoplast ist, dadurch gekennzeichnet, daß die Folie mindestens ein Titandioxid vom Rutil-Typ als Weißpigment und mindestens einen optischen Aufheller in Gegenwart oder Abwesenheit weiterer Zusätze enthält, sowie mit mindestens einer weiteren Funktionalität versehen ist.

Die Erfindung betrifft ferner ein Verfahren zur Herstellung dieser Folie und ihre Verwendung.

Der Ausdruck "weitere bzw. zusätzliche Funktionalität" beinhaltet die UV-Stabilität, Vergilbungsresistenz, photooxidative Stabilität, flammhemmende Ausrüstung und Siegelfähigkeit, ferner daß sie auf einer oder beiden Oberflächen beschichtet ist und/oder auf einer oder beiden Seiten coronabehandelt ist. Eine solche Folie kann eine oder mehrere der funktionellen Eigenschaften besitzen.

Eine zusätzliche Funktionalität bedeutet also, daß die Folie mit einem Flammschutzmittel und/oder mit UV-Stabilisatoren ausgerüstet ist und/oder mit einem löslichen Farbstoff eingefärbt ist und/oder siegelfähig ist und/oder auf einer oder beiden Oberflächen beschichtet ist und/oder auf einer oder beiden Seiten coronabehandelt ist.

Alle derartigen Folien zeichnen sich neben einer guten Verstreckbarkeit, guten mechanischen sowie optischen Eigenschaften, vor allem einen hohen Weißgrad in Kombination mit einem niedrigen Gelbwert und mit einerwirtschaftlichen Thermoformbarkeit aus.

Zu den guten optischen Eigenschaften zählen beispielsweise eine homogene, streifenfreie Einfärbung über die gesamte Folienbreite und -länge, eine niedrige Transparenz (≤ 40%) und ein akzeptabler Oberflächenglanz (≥10).

Ein niedriger Gelbwert (YID) bedeutet, daß der Gelbwert der Folien gemäß der Erfindung bei einer Foliendicke im Bereich von 10 bis 500 µm bei ≤ 40, vorzugsweise ≤ 35, insbesondere bei ≤ 30 liegt.

Ein hoher Weißgrad bedeutet, daß der Weißgrad der Folien bei ≥ 85%, vorzugsweise bei ≥ 87%, insbesondere bei ≥ 90% liegt.

Zu den guten mechanischen Eigenschaften zählt unter anderem ein hoher E-Modul (E_{MD} > 3300 N/mm²; E_{TD} > 4800 N/mm²) sowie gute Reißfestigkeitswerte (in MD > 130 N/mm²; in TD > 180 N/mm²) und gute Reißdehnungswerte in Längs- und Querrichtung (in MD > 120 %; in TD > 70 %).

Zu der guten Verstreckbarkeit zählt, daß sich die Folie bei ihrer Herstellung sowohl in Längs- als auch in Querrichtung hervorragend und ohne Abrisse orientieren läßt.

Thermoformbarkeit bedeutet, daß sich die Folie auf handelsüblichen Tiefziehmaschinen ohne unwirtschaftliches Vortrocknen zu komplexen und großflächigen Formkörpern tiefziehen bzw. thermoformen läßt.

Darüber hinaus ist die Folie gemäß der Erfindung rezyklierbar, d.h. daß während der Folienherstellung im laufenden Betrieb anfallendes Verschnittmaterial wieder in den Produktionsprozeß zurückgeschleust werden kann, insbesondere ohne Verlust der optischen und der mechanischen Eigenschaften, z.B. ohne den Gelbwert der Folie negativ zu beeinflussen.

Die Folie enthält als Hauptbestandteil mindestens einen kristallisierbaren Thermoplasten. Geeignete kristallisierbare bzw. teilkristalline Thermoplaste sind beispielsweise Polyethylenterephthalat (PET), Polyethylennaphthalat (PEN), Polybutylenterephthalat (PBT), bibenzolmodifiziertes Polyethylenterephthalat (PETBB), bibenzolmodifiziertes Polybutylenterephthalat (PBTBB), bibenzolmodifiziertes Polyethylennaphthalat (PENBB) oder Mischungen daraus, wobei Polyethylenterephthalat und Polyethylennaphthalat bevorzugt sind.

Zur Herstellung der Thermoplaste können neben den Hauptmonomeren, z.B. Dimethylterephthalat (DMT), Ethylenglycol (EG), Propylenglycol (PG), 1,4-Butandiol, Terephthalsäure (TA), Benzoldicarbonsäure, 2,6-Naphtalindicarboxylat (NDC) und/oder 2,6-Naphtalindicarbonsäure (NDA), auch Isophthalsäure (IPA), trans- und/ oder cis-1,4-Cyclohexandimethanol (c-CHDM, t-CHDM oder c/t-CHDM) verwendet werden.

Gemäß der Erfindung versteht man unter kristallisierbaren Thermoplasten kristallisierbare Homopolymere, kristallisierbare Copolymere, kristallisierbare Compounds, kristallisierbaresRecyklat und andere Variationen von kristallisierbaren Thermoplasten.

Bevorzugte Ausgangsmaterialien zur Herstellung der Folie sind kristallisierbare Thermoplaste, die einen Kristallitschmelzpunkt Tm, gemessen mit DSC (Differential Scanning Calorimetry) mit einer Aufheizgeschwindigkeit von 20 °C/min, von 180 °C bis über 365 °C, vorzugsweise von 180 °C bis 310 °C, einen Kristallisationstemperaturbereich Tc von 75 °C bis 280 °C, eine Glasübergangstemperatur Tg von 65 °C bis 130 °C , eine Dichte, gemessen nach DIN 53479, von 1,10 bis 1,45 und eine Kristallinität von 5 % bis 65 %, vorzugsweise 20 % bis 65 % aufweisen.

Für die Thermoformbarkeit ist es wichtig, daß der kristallisierbare Thermoplast ein Diethylenglykolgehalt von ≥ 1,0 Gew.%, vorzugsweise ≥ 1,2 Gew.%, insbesondere ≥ 1,3 Gew.% und/oder ein Polyethylenglykolgehalt von ≥ 1,0 Gew.%, vorzugsweise ≥ 1,2 Gew.%, insbesondere ≥ 1,3 Gew.% und/oder ein Isophthalsäuregehalt von 3 Gew.-% bis 10 Gew.-% aufweist.

Hauptbestandteil heißt, daß die Menge an Thermoplast bevorzugt im Bereich von 50 bis 98 Gew.-%, insbesondere von 75 bis 95 Gew.-% liegt. Die restliche Menge zu 100 % können neben dem anorganischen Pigment und dem optischen Aufheller weitere für biaxial orientierte Folien übliche Additive sein.

Die Folie gemäß der Erfindung kann sowohl einschichtig als auch mehrschichtig sein. Sie kann ebenfalls mit diversen Copolyestern oder Haftvermittlern beschichtet sein. Sie enthält im allgemeinen zwecks wirtschaftlicher Herstellung die für Folien üblichen Antiblock- und Gleitmittel.

In der mehrschichtigen Ausführungsform ist die Folie aus mindestens einer Kernschicht und mindestens einer Deckschicht aufgebaut, wobei insbesondere ein dreischichtiger A-B-A oder A-B-C Aufbau bevorzugt ist.

Für diese Ausführungsform ist es wesentlich, daß der Thermoplast der Kernschicht eine ähnliche Standardviskosität besitzt wie der Thermoplast der Deckschicht (en), die an die Kernschicht angrenzt (angrenzen).

In einer besonderen Ausführungsform können die Deckschichten aus einem Polyethylenterephthalat, aus einem bibenzolmodifizierten Polyethylenterephthalat-Polymeren, aus einem bibenzolmodifizierten und/oder unmodifizierten Polyethylennaphthalat-Polymeren oder aus einem bibenzolmodifizierten und/oder unmodifizierten Polyethylenterephthalat-Polyethylennaphthalat-Copolymeren oder -Compound bestehen.

In dieser Ausführungsform haben die Thermoplaste der Deckschichten ebenfalls ähnliche Standardviskositäten wie der Thermoplast der Kernschicht.

Die dem Thermoplasten zugesetzten Bestandteile der Folie können sowohl der Basisschicht als auch einer oder beiden Deckschichten zudosiert werden. Hierfür bietet sich der Extrusionsvorgang, vorzugsweise unter Einschluß des Masterbatch-Verfahrens an.

Wichtig bei der Masterbatch-Technologie ist, daß die Korngröße und das Schüttgewicht des Masterbatches ähnlich denen des Thermoplasten ist, so daß eine homogene Verteilung und damit eine homogene Erzielung der gewünschten Eigenschaften der Folie, beispielsweise der weißen Einfärbung, der Schwerentflammbarbeit und der UV-Stabilität erfolgen kann.

Bei der Masterbatch-Technologie werden die Zusätze zunächst in einem festen Trägermaterial dispergiert. Als Trägermaterial kommen der Thermoplast selbst, z.B. das Polyethylenterephthalat oder auch andere Polymere, die mit dem Thermoplasten ausreichend verträglich sind, in Frage. Zur Folienherstellung wird das Masterbatch mit dem als Folienrohstoff vorgesehenen Thermoplast vermischt und zusammen in einem Extruder behandelt, wobei die Bestandteile miteinander verschmelzen und so in dem Thermoplasten gelöst werden.

Die Folie gemäß der Erfindung enthält mindestens ein Titandioxid vom Rutil-Typ als Pigment, wobei die Menge an Pigment vorzugsweise im Bereich von 2 bis 25 Gew.-% liegt, bezogen auf das Gewicht des kristallisierbaren Thermoplasten. Erfindungsgemäß wird das Titandioxid über die sogenannte Masterbatch-Technologie bei der Folienherstellung zudosiert.

Die Folie enthält ferner mindestens einen optischen Aufheller, wobei der optische Aufheller in Mengen von 10 bis 50.000 ppm,vorzugsweise von 20 bis 30.000 ppm, insbesondere von 50 bis 25.000 ppm, bezogen auf das Gewicht des kristallisierbaren Thermoplasten, eingesetzt wird. Auch der optische Aufheller wird über die sogenannte Masterbatch-Technologie zudosiert.

Geeignete optische Aufheller sind Benzoxazol Derivate, Triazine, Phenylcumarine und Bis-sterylbiphenyle; hiervon bevorzugt sind ®Tinopal (Ciba-Geigy, Basel, Schweiz), ®Hostalux KS (Clariant, Deutschland) sowie ®Eastobrite OB-1 (Eastman Chemicals, Deutschland).

Es ist mitunter zweckmäßig, neben dem optischen Aufheller auch noch im Thermoplasten lösliche blaue Farbstoffe zuzusetzen. Als geeigneter blauer Farbstoff hat sich beispielsweise ®Sudanblau 2 (BASF, Ludwigshafen) erwiesen.

Diese Farbstoffe werden in Mengen von 10 ppm bis 10.000 ppm, vorzugsweise 20 bis 5.000 ppm, insbesondere 50 bis 1.000 ppm, bezogen auf das Gewicht des kristallisierbaren Thermoplasten, eingesetzt.

Die erfindungsgemäß eingesetzten optischen Aufheller sind in der Lage, UV-Strahlen im Bereich von 360 bis 380 nm zu absorbieren und als längerwelliges, sichtbares blauviolettes Licht wieder abzugeben.

Die Titandioxidteilchen bestehen überwiegend aus Rutil, welcher im Vergleich zu Anatas eine höhere Deckkraft zeigt. In einer bevorzugten Ausführungsform bestehen die Titandioxidteilchen zu mindestens 95 Gew.-% aus Rutil. Sie können nach einem üblichen Verfahren, z.B. nach dem Chlorid- oder dem Sulfat-Prozeß, hergestellt werden. Ihre Menge in der Kernschicht beträgt zweckmäßigerweise 2 bis 25 Gew.-%, bezogen auf das Gewicht der Kernschicht. Die mittlere Teilchengröße ist relativ klein und liegt vorzugsweise im Bereich von 0,1 bis 0,5, insbesondere von 0,1 bis 0,3 µm (Sedimentationsmethode).

Durch Titandioxid der beschriebenen Art entstehen innerhalb der Polymermatrix keine Vakuolen während der Folienherstellung.

Die Titandioxidteilchen können einen Überzug aus anorganischen Oxiden besitzen, wie er üblicherweise als Überzug für TiO₂-Weißpigment in Papieren oder Anstrichmitteln zur Verbesserung der Lichtechtheit eingesetzt wird.

TiO₂ ist bekanntlich fotoaktiv. Bei Einwirkung von UV-Strahlen bilden sich freie Radikale auf der Oberfläche der Partikel. Diese freien Radikale können in die Polymermatrix wandern, was zu Abbaureaktionen und Vergilbung führt. Um dies zu vermeiden, können die TiO₂-Partikel oxidisch beschichtet werden. Zu den besonders geeigneten Oxiden für die Beschichtung gehören die Oxide von Aluminium, Silicium, Zink oder Magnesium oder Mischungen aus zwei oder mehreren dieser Verbindungen. TiO₂-Partikel mit einem Überzug aus mehreren dieser Verbindungen werden z. B. in der EP-A-0 044 515 und EP-A-0 078 633 beschrieben. Weiterhin kann der Überzug organische Verbindungen mit polaren und unpolaren Gruppen enthalten. Die organischen Verbindungen müssen bei der Herstellung der Folie durch Extrusion der Polymerschmelze ausreichend thermostabil sein. Polare Gruppen sind beispielsweise -OH; -OR; -COOX; (X = R; H oder Na, R = Alkyl mit 1 bis 34 C-Atomen). Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie z. B. Polydimethylsiloxan und Polymethylhydrogensiloxan.

Der Überzug für die Titandioxidteilchen besteht im allgemeinen aus 1,0 bis 12,0, vorzugsweise 2,0 bis 6,0 g anorganischen Oxiden und/oder 0,5 bis 3,0, vorzugsweise 0,7 bis 1,5 g organischen Verbindungen, bezogen auf 100,0 g Titandioxidteilchen. Der Überzug wird üblicherweise auf die Teilchen in wäßriger Suspension aufgebracht. Die anorganischen Oxide können aus wasserlöslichen Verbindungen, z. B. Alkali-, insbesondere Natriumnitrat, Natriumsilikat (Wasserglas) oder Kieselsäure in der wäßrigen Suspension ausgefällt werden.

Unter anorganischen Oxiden wie Al₂O₃ oder SiO₂ sind auch die Hydroxide oder deren verschiedene Entwässerungsstufen wie z. B. Oxidhydrat zu verstehen, ohne daß man deren genaue Zusammensetzung und Struktur kennt. Auf das TiO₂-Pigment werden nach dem Glühen und Mahlen in wäßriger Suspension die Oxidhydrate z. B. des Aluminiums und/oder Silicium gefällt, die Pigmente werden dann gewaschen und getrocknet. Diese Ausfällung kann somit direkt in einer Suspension geschehen, wie sie im Herstellprozeß nach der Glühung und der sich anschließenden Naßmahlung anfällt. Die Ausfällung der Oxide und/oder Oxidhydrate der jeweiligen Metalle erfolgt aus den wasserlöslichen Metallsalzen im bekannten pH-Bereich. Für das Aluminium wird beispielsweise Aluminiumsulfat in wäßriger Lösung (pH: ≤ 4) eingesetzt und durch Zugabe von wäßriger Ammoniaklösung oder Natronlauge im pH-Bereich zwischen 5 und 9, vorzugsweise zwischen 7 und 8,5, das Oxidhydrat gefällt. Geht man von einer Wasserglas- oder Alkalialuminatlösung aus, sollte der pH-Wert der vorgelegten TiO₂-Suspension im stark alkalischen Bereich (pH: ≥ 8) liegen. Die Ausfällung erfolgt dann durch Zugabe von Mineralsäure wie Schwefelsäure im pH-Bereich 5 bis 8. Nach der Ausfällung der Metalloxide wird die Suspension noch 15 min bis etwa 2 Stunden gerührt, wobei die ausgefällten Schichten eine Alterung erfahren. Das beschichtete Produkt wird von der wäßrigen Dispersion abgetrennt und nach dem Waschen bei erhöhter Temperatur, vorzugsweise bei70 bis 100 °C, getrocknet.

In einer bevorzugten Ausführungsform enthält die Folie gemäß der Erfindung Titandioxid der Firmen Kerr McGee (®Tronox RFK2) oder Sachtleben (®Hombitan der Klassen R oder RC).

Durch die synergistische Wirkung des Titandioxid vom Rutil-Typ und des optischen Aufhellers weist die Folie einen Weißgrad von ≥ 85%, vorzugsweise ≥ 87%, insbesondere ≥ 90% in Kombination mit einem Gelbwert von ≤ 40, vorzugsweise ≤ 35, insbesondere ≤ 30 bei einer Dicke im Bereich von 10 µm bis 500 µm auf. Die Folie sieht visuell extrem weiß auf, sie hat keinen Gelbstich.

Gemäß der Erfindung kann die Folie auf mindestens einer ihrer Oberflächen beschichtet sein, so daß die Beschichtung auf der fertigen Folie eine Stärke von 5 bis 100 nm, bevorzugt 20 bis 70 nm, insbesondere 30 bis 50 nm aufweist. Die Beschichtung wird bevorzugt In-line aufgebracht, d.h. während des Folienherstellprozesses, zweckmäßigerweise nach der Extrusion. Bevorzugt ist auch die Aufbringung mittels des "Reverse gravure-roll coating"-Verfahrens, bei dem sich die Beschichtungen äußerst homogen in den genannten Schichtdicken auftragen lassen. Die Beschichtungen werden als verdünnte Lösung, Emulsion oder Dispersion vorzugsweise in wäßriger Form auf mindestens eine Folienoberfläche aufgebracht und anschließend das Lösungsmittel verflüchtigt. Werden die Beschichtungen In-line vor der Querstreckung aufgebracht, reicht gewöhnlich die Temperaturbehandlung in der Querstreckung und anschließenden Hitzefixierung aus, um das Lösungsmittel zu verflüchtigen und die Beschichtung zu trocknen. Sie verleihen der Folienoberfläche eine zusätzliche Funktion, beispielsweise wird die Folie dadurch siegelfähig, bedruckbar, metallisierbar, sterilisierbar, antistatisch oder verbessern z.B. die Aromabarriere oder ermöglichen die Haftung zu Materialien, die ansonsten nicht auf der Folienoberfläche haften würden (z.B. fotografische Emulsionen). Beispiele für Stoffe/ Zusammensetzungen, die zusätzliche Funktionalität verleihen sind:

Acrylate (WO 94/13476), Polyethylenvinylalkohole, Polyvinylidendichlorid, Wasserglas (Na₂SiO₄), hydrophilische Polyester (5-Na-sulfoisophthalsäurehaltige PET/IPA Polyester (EP-A-0 144 878, US-A-4,252,885 oder EP-A-0 296 620), Vinylacetate (WO 94/13481), Polyvinylacetate, Polyurethane, Alkali- oder Erdalkalisalze von C₁₀-C₁₈-Fettsäuren, Butadiencopolymere mit Acrylnitril oder Methylmethacrylat, Methacrylsäure, Acrylsäure oder deren Ester. Die Stoffe/Zusammensetzungen, die die zusätzliche Funktionalität verleihen, können die üblichen Additive z.B. Antiblockmittel, pH-Stabilisatoren in Mengen im Bereich von 0,05 bis 5,0 Gew.-%, vorzugsweise von 0,1 bis 3,0 Gew.-% enthalten.

Die Folie kann auch mindestens einseitig coronabehandelt und/oder mindestens einseitig mit einer kratzfesten Beschichtung, mit einem Copolyester oder mit einem Haftvermittler beschichtet und/oder mit Ethylen-Vinylalkohol-Copolymer, Polyvinylalkohol oder Polyvinylidendichlorid bedampft sein.

Des weiteren können die Folien - vorzugsweise in einem off-line-Verfahren - mit Metallen wie Aluminium oder keramischen Materialien wie SiOₓ oder AlₓO_{y} beschichtet werden. Dies verbessert insbesondere ihre Gasbarriereeigenschaften.

Der Thermoformprozeß umfaßt in der Regel die Schritte Vortrocknen, Aufheizen, Formen, Abkühlen, Entformen, Tempern. Beim Thermoformprozeß wurde festgestellt, daß sich die Folien gemäß der Erfindung ohne vorheriges Vortrocknen überraschenderweise tiefziehen lassen. Dieser Vorteil im Vergleich zu tiefziehfähigen Polycarbonat- oder Polymethylmethacrylat-Folien, bei denen Vortrocknungszeiten von 10 bis 15 Stunden, je nach Dicke bei Temperaturen von 100 °C bis 120 °C erforderlich sind, reduziert drastisch die Kosten des Umformprozesses. Daneben war sehr überraschend, daß die Detailwiedergabe des Formkörpers hervorragend ist. Die Folie kann auch beispielsweise als Rollenware dem Thermoformprozess zugeführt werden.

Es war mehr als überraschend, daß sich die Folien gemäß der Erfindung durch ein im Vergleich zum Standardthermoplast höheren Diethylenglykolgehalt und/oder Polyethylenglykolgehalt und/oder IPA-Gehalt wirtschaftlich auf handelsüblichen Tiefziehanlagen thermoformen lassen und eine hervorragende Detailwiedergabe liefern.

Für das Thermoformen haben sich folgende Verfahrensparameter im allgemeinen als geeignet erwiesen:

| | |
|---|---|
| Verfahrensschritt | Folie gemäß der Erfindung |
| Vortrocknen | nicht erforderlich |
| Temperatur der Form | 100 bis 140 °C |
| Aufheizzeit pro 10 µm Foliendicke | < 5 sec pro 10 µm Foliendicke |
| Folientemperatur beim Verformen | 100 bis 160 °C |
| Möglicher Verstreckfaktor | 1,0 bis 2,5 |
| Detailwiedergabe | hervorragend |
| Schrumpf (Schwindung) | < 1,5 % |

Die Folie gemäß der Erfindung kann in einer besonderen Ausführungsform UVstabil ausgerüstet sein.

Licht, insbesondere der ultraviolette Anteil der Sonnenstrahlung, d. h. der Wellenlängenbereich von 280 bis 400 nm, induziert bei Thermoplasten Abbauvorgänge, als deren Folge sich nicht nur das visuelle Erscheinungsbild durch eintretende Farbänderung bzw. Vergilbung ändert, sondern durch die auch die mechanischphysikalischen Eigenschaften der Folien aus den Thermoplasten äußerst negativ beeinflußt werden.

Die Unterbindung dieser photooxidativen Abbauvorgänge ist von erheblicher technischer und wirtschaftlicher Bedeutung, da andernfalls die Anwendungsmöglichkeiten von zahlreichen Thermoplasten drastisch eingeschränkt sind.

Polyethylenterephthalate beginnen beispielsweise schon unterhalb von 360 nm UV-Licht zu absorbieren, ihre Absorption nimmt unterhalb von 320 nm beachtlich zu und ist unterhalb von 300 nm sehr ausgeprägt. Die maximale Absorption liegt im Bereich zwischen 280 und 300 nm.

In Gegenwart von Sauerstoff werden hauptsächlich Kettenspaltungen, jedoch keine Vernetzungen beobachtet. Kohlenmonoxid, Kohlendioxid und Carbonsäuren stellen die mengenmäßig überwiegenden Photooxidationsprodukte dar. Neben der direkten Photolyse der Estergruppen müssen noch Oxidationsreaktionen in Erwägung gezogen werden, die über Peroxidradikale ebenfalls die Bildung von Kohlendioxid zur Folge haben.

Die Photooxidation von Polyethylenterephthalaten kann auch über Wasserstoffabspaltung in α-Stellung der Estergruppen zu Hydroperoxiden und deren Zersetzungsprodukten sowie zu damit verbundenen Kettenspaltungen führen (H. Day, D. M. Wiles: J. Appl. Polym. Sci 16, 1972, Seite 203).

UV-Stabilisatoren, d.h. UV-Absorber als Lichtschutzmittel, sind chemische Verbindungen, die in die physikalischen und chemischen Prozesse des lichtinduzierten Abbaus eingreifen können. Auch Ruß und andere Pigmente können teilweise einen Lichtschutz bewirken. Diese Substanzen sind jedoch für Folien gemäß der Erfindung ungeeignet, da sie zur Verfärbung oder Farbänderung führen.

Geeignete UV-Stabilisatoren als Lichtschutzmittel sind UV-Stabilisatoren, die mindestens 70 %, vorzugsweise 80 %, besonders bevorzugt 90 %, des UV-Lichts im Wellenlängenbereich von 180 nm bis 380 nm, vorzugsweise 280 bis 350 nm absorbieren. Diese sind insbesondere dann geeignet, wenn sie im Temperaturbereich von 260 bis 300 °C thermisch stabil sind, d.h. sich nicht in Spaltprodukte zersetzen und nicht zur Ausgasung führen. Geeignet sind beispielsweise 2-Hydroxybenzophenone, 2-Hydroxybenzotriazole, nickelorganische Verbindungen, Salicylsäureester, Zimtsäureester-Derivate, Resorcinmonobenzoate, Oxalsäureanilide, Hydroxybenzoesäureester, Benzoxazinone, sterisch gehinderte Amine und Triazine, wobei die 2-Hydroxybenzotriazole, die Benzoxazinone und die Triazine bevorzugt sind.

Die Folie gemäß der Erfindung enthält mindestens einen UV-Stabilisator als Lichtschutzmittel, wobei die Konzentration des UV-Stabilisators vorzugsweise im Bereich von 0,01 bis 5,0 Gew.-%, insbesondere im Bereich von 0,1 bis 3,0 Gew.-%, bezogen auf das Gewicht der Schicht des kristallisierbaren Thermoplasten, liegt.

In einer ganz besonders bevorzugten Ausführungsform enthält die Folie 0,01 bis 5,0 Gew.-% 2-(4,6-Diphenyl-1,3,5-triazin-2-yl)-5-hexyloxy-phenol der Formel 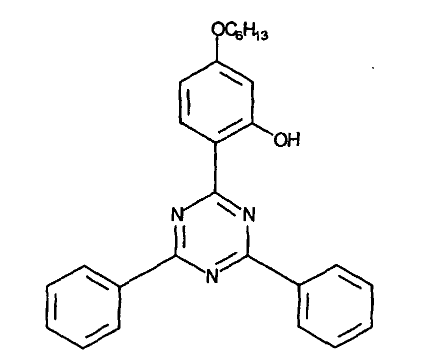 oder 0,01 Gew.-% bis 5,0 Gew.-% 2,2-Methylen-bis(6-(2H-benzotriazol-2-yl)-4-(1,1,2,2-tetramethylpropyl)-phenol der Formel 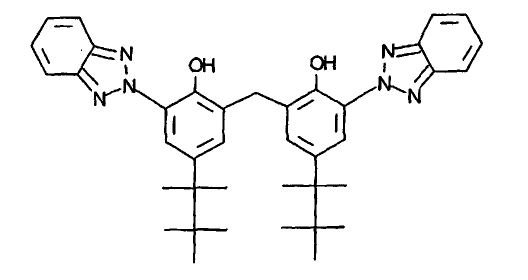 oder 0,1 bis 5,0 Gew.-% 2,2'-(1,4-Phenylen)bis[4H-3,1-benzoxazin-4-on] der Formel

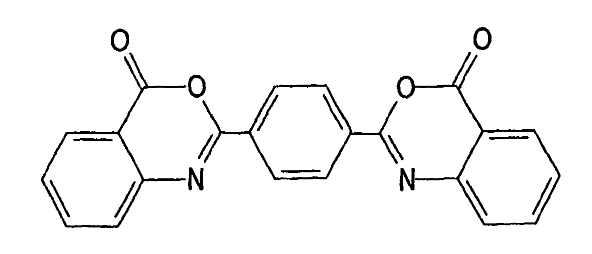

In einer weiteren Ausführungsform können auch Mischungen dieser UV-Stabilisatoren oder Mischungen von mindestens einem dieser UV-Stabilisatoren mit anderen UV-Stabilisatoren eingesetzt werden, wobei die Gesamtkonzentration an Lichtschutzmittel vorzugsweise zwischen 0,1 und 5,0 Gew.- %, besonders bevorzugt im Bereich von 0,5 bis 3,0 Gew.- %, liegt, bezogen auf das Gewicht der ausgerüsteten Schicht.

Es ist völlig überraschend, daß der Einsatz der obengenannten UV-Stabilisatoren in Folien zu dem gewünschten Ergebnis führt. Wenn versucht wird, eine gewisse UV-Stabilität über ein Antioxidans zu erreichen, führt dies mitunter zu einer Farbänderung nach einer Bewitterung.

Werden handelsübliche UV-Stabilisatoren eingesetzt, die das UV-Licht absorbieren und im allgemeinen somit Schutz bieten, wird aber festgestellt, daß
- der UV-Stabilisator eine mangelnde thermische Stabilität hat und sich bei Temperaturen zwischen 200 °C und 240 °C zersetzt oder ausgast,
- große Mengen (ca. 10 bis 15 Gew.-%) UV-Stabilisator eingearbeitet werden müssen, damit das UV-Licht absorbiert wird und die Folie nicht geschädigt wird.

Bei diesen hohen Konzentrationen weist die Folie schon nach der Herstellung starke Farbveränderungen auf. Auch werden die mechanischen Eigenschaften negativ beeinflußt. U.a. treten auf:
- Düsenablagerungen, was zu Profilschwankungen führt;
- Walzenablagerungen vom UV-Stabilisator, was zur Beeinträchtigung der optischen Eigenschaften (schlechte Trübung, Klebedefekt, inhomogene Oberfläche) führt;
- Ablagerungen im Produktionsprozess.
   Daher war es mehr als überraschend, daß bereits mit niedrigen Konzentrationen des erfindungsgemäß eingesetzen UV-Stabilisators ein hervorragender UV-Schutz erzielt wurde. Sehr überraschend war, daß sich bei diesem hervorragenden UV-Schutz
- der Gelbwert der Folie im Vergleich zu einer nicht-stabilisierten Folie im Rahmen der Meßgenauigkeit nicht ändert,
- keine Ausgasungen, keine Düsenablagerungen einstellen, wodurch die Folie eine exzellente Optik aufweist und ein ausgezeichnetes Profil und eine ausgezeichnete Planlage hat,
- sich die UV-stabilisierte Folie durch eine hervorragende Laufsicherheit auszeichnet, so daß sie verfahrenssicher hergestellt werden kann. Damit ist die Folie auch wirtschaftlich rentabel.

Eine gegebenenfalls flammhemmende Wirkung bedeutet, daß die Folie gemäß der Erfindung in einer sogenannten Brandschutzprüfung die Bedingungen nach DIN 4102 Teil 2 und insbesondere die Bedingungen nach DIN 4102 Teil 1 erfüllt und in die Baustoffklasse B 2 und insbesondere B1 der schwer entflammbaren Stoffe eingeordnet werden kann.

Des weiteren soll die gegebenenfalls flammhemmend ausgerüstete Folie den UL-Test 94 "Horizontal Burning Test for Flammability of Plastic Material" bestehen, so daß sie in die Klasse 94 VTM-0 eingestuft werden kann.

Die Folie gemäß der Erfindung enthält ein Flammschutzmittel, das über die sogenannte Masterbatch-Technologie direkt bei der Folienherstellung zudosiert wird, wobei die Konzentration des Flammschutzmittels im Bereich von 0,5 bis 30,0 Gew.-%, vorzugsweise von 1,0 bis 20,0 Gew.-%, bezogen auf das Gewicht der Schicht des kristallisierbaren Thermoplasten, liegt. Die Konzentration des Flammschutzmittels im Masterbatch liegt im allgemeinen im Bereich von 5,0 bis 60,0 Gew.-%. Das Flammschutzmittel wird im Trägermaterial dispergiert oder kann auch im Thermoplasten chemisch gebunden sein.

Zu den typischen Flammschutzmitteln gehören Bromverbindungen, Chlorparaffine und andere Chlorverbindungen, Antimontrioxid, Aluminiumtrihydrate, wobei die Halogenverbindungen aufgrund der entstehenden halogenhaltigen Nebenprodukte nachteilig sind. Des weiteren ist die geringe Lichtbeständigkeit einer damit ausgerüsteten Folie neben der Entwicklung von Halogenwasserstoffen im Brandfall extrem nachteilig. Geeignete Flammschutzmittel, die gemäß der Erfindung eingesetzt werden, sind beispielsweise organische Phosphorverbindungen wie Carboxyphosphinsäuren, deren Anhydride und Alkanphosphonsäureester, vorzugsweise Methanphosphonsäureester. Wesentlich ist, daß die organische Phosphorverbindung im Thermoplasten löslich ist, da andernfalls die geforderten optischen Eigenschaften nicht erfüllt werden.

Da die Flammschutzmittel im allgemeinen eine gewisse Hydrolyseempfindlichkeit aufweisen, kann der zusätzliche Einsatz eines Hydrolysestabilisators sinnvoll sein.

Als Hydrolysestabilisator werden im allgemeinen phenolische Stabilisatoren, Alkali-/Erdalkalistearate und/oder Alkali-/Erdalkalicarbonate in Mengen von 0,01 bis 1,0 Gew.-% eingesetzt. Phenolische Stabilisatoren werden in einer Menge von 0,05 bis 0,6 Gew.-%, insbesondere 0,15 bis 0,3 Gew.-% und mit einer Molmasse von mehr als 500 g/mol bevorzugt. Pentaerythriyl-tetrakis-3-(3,5-di-*tert*.-butyl-4-hydroxyphenyl)-propionat oder 1,3,5-Trimethyl-2,4,6-tris(3,5-di-*tert*.-butyl-4-hydroxybenzyl)-benzol sind besonders vorteilhaft.

In dieser bevorzugten Ausführungsform enthält die schwer entflammbare Folie gemäß der Erfindung als Hauptbestandteil ein kristallisierbares PET, Titandioxid, einen optischen Aufheller, 1,0 bis 20,0 Gew.-% einer im Thermolast löslichen organischen Phosphorverbindung als Flammschutzmittel und 0,1 bis 1,0 Gew.-% eines Hydrolysestabilisators. Als Flammschutzmittel ist ®Amgard P 1045 der Firma Albright & Wilson bevorzugt.

Diese Angabe bezüglich Flammschutzmittel und Hydrolysestabilisator gilt auch in Hinblick auf andere erfindungsgemäß zu verwendende Thermoplasten.

Ganz überraschend haben Brandschutzversuche nach DIN 4102 und dem UL-Test gezeigt, daß es im Falle einer dreischichtigen Folie durchaus ausreichend ist, die 0,5 bis 2,0 mm dicken Deckschichten mit Flammschutzmittel auszurüsten, um eine verbesserte Flammhemmung zu erreichen. Bei Bedarf und bei hohen Brandschutzanforderungen kann auch die Kernschicht mit Flammschutzmittel ausgerüstet sein, d. h. eine sogenannte Grundausrüstung beinhalten.

Darüber hinaus ergaben Messungen, daß die Folie gemäß der Erfindung bei Temperaturbelastungen von 100 °C über einen längeren Zeitraum nicht versprödet. Dieses Resultat wird auf die synergistische Wirkung von geeigneter Vorkristallisation, Vortrocknung, Masterbatch-Technologie und Hydrolysestabilisator zurückgeführt.

Keine Versprödungen nach Temperaturbelastung bedeutet, daß die Folie nach 100 Stunden Tempervorgang bei 100 °C in einem Umluftofen keine Versprödung und keine nachteiligen mechanischen Eigenschaften aufweist.

Überraschenderweise erfüllen Folie gemäß der Erfindung im Dickenbereich 10 - 350 µm die Anforderungen der Baustoffklassen B2 und B1 nach DIN 4102 und des UL-Test 94.

Der Oberflächenglanz der Folien gemäß der Erfindung, gemessen nach DIN 67530 (Meßwinkel 20°), ist ≥ 15, vorzugsweise ≥ 20 und die Lichttransmission L*, gemessen nach ASTM D 1003, beträgt ≤ 85 %, vorzugsweise ≤ 80 %, was für die erzielte Wirkung in Kombination mit der weißen Einfärbung überraschend gut ist.

Wo eine sehr gute Siegelfähigkeit gefordert wird und wo diese Eigenschaft nicht über eine On-line Beschichtung erreicht werden kann, ist die Folie gemäß der Erfindung zumindest dreischichtig aufgebaut und umfaßt dann in einer besonderen Ausführungsform als Schichten die Basisschicht B, die siegelfähige Deckschicht A und die Deckschicht C, die siegelfähig oder nicht siegelfähig sein kann. In der Ausführungsform, in der die Deckschicht C siegelfähig ist, sind die Deckschichten A und C identisch.

### Siegelfähige Deckschicht A

Die durch Koextrusion auf die Basisschicht B aufgebrachte siegelfähige Deckschicht A ist auf Basis von Polyestercopolymeren aufgebaut und besteht im wesentlichen aus Copolyestern, die überwiegend aus Isophthalsäure- und Terephthalsäure-Einheiten und aus Ethylenglykol-Einheiten zusammengesetzt sind. Die restlichen Monomereinheiten stammen aus anderen aliphatischen, cycloaliphatischen oder aromatischen Diolen bzw. Dicarbonsäuren, wie sie auch in der Basisschicht vorkommen können. Die bevorzugten Copolyester, die die gewünschten Siegeleigenschaften bereitstellen, sind solche, die aus Etylenterephthalat- und Ethylenisophthalat-Einheiten und aus Ethylenglykol-Einheiten aufgebaut sind. Der Anteil an Ethylenterephthalat beträgt 40 bis 95 Mol-% und der entsprechende Anteil an Ethylenisophthalat 60 bis 5 Mol-%. Bevorzugt sind Copolyester, bei denen der Anteil an Ethylenterephthalat 50 bis 90 Mol-% und der entsprechende Anteil an Ethylenisophthalat 50 bis 10 Mol-% beträgt und insbesondere Copolyester, bei denen der Anteil an Ethylenterephthalat 60 bis 85 Mol-% und der entsprechende Anteil an Ethylenisophthalat 40 bis 15 Mol-% beträgt.

### Nicht siegelfähige Deckschicht C

Für die andere, nicht siegelfähige Deckschicht C oder für eventuell vorhandene Zwischenschichten können prinzipiell die gleichen Polymere verwendet werden, wie zuvor für die Basisschicht beschrieben wurde.

Die gewünschten Siegel- und die gewünschten Verarbeitungseigenschaften der Folie gemäß der Erfindung werden aus der Kombination der Eigenschaften des verwendeten Copolyesters für die siegelfähige Deckschicht und den Topographien der siegelfähigen Deckschicht A und der siegelfähigen oder nicht siegelfähigen Deckschicht C erhalten.

Die Siegelanspringtemperatur von 130 °C und die Siegelnahtfestigkeit von mindestens 0,6 N/15mm wird erreicht, wenn für die siegelfähige Deckschicht A die oben näher beschriebenen Copolymere verwendet werden. Die besten Siegeleigenschaften der Folie erhält man, wenn dem Copolymeren keine weiteren Additive, insbesondere keine anorganische oder organische Filler zugegeben werden. Für diesen Fall erhält man bei vorgegebenem Copolyester die niedrigste Siegelanspringtemperatur und die höchsten Siegelnahtfestigkeiten. Allerdings ist in diesem Fall die Handhabung der Folie schlecht, da die Oberfläche der siegelfähigen Deckschicht A stark zum Verblocken neigt. Die Folie läßt sich kaum wickeln und ist für eine Weiterverarbeitung auf schnellaufenden Verpackungsmaschinen nicht geeignet. Zur Verbesserung der Handhabung der Folie und der Verarbeitbarkeit ist es notwendig, die siegelfähige Deckschicht A zu modifizieren. Dies geschieht am besten mit Hilfe von geeigneten Antiblockmitteln einer ausgewählten Größe, die in einer bestimmten Konzentration der Siegelschicht zugegeben werden und zwar derart, daß einerseits das Verblocken minimiert und andererseits die Siegeleigenschaften nur unwesentlich verschlechtert werden.

Zur Einstellung weiterer gewünschter Eigenschaften kann die Folie auch corona- bzw. flammbehandelt sein. Die Behandlungsintensität ist so gewählt, daß die Oberflächenspannung der Folie im allgemeinen über 45 mN/m liegt.

Die Herstellung der Folie gemäß der Erfindung kann beispielsweise nach einem Extrusionsverfahren in einer Extrusionsstraße erfolgen.

Zu der wirtschaftlichen Herstellung zählt, daß die Rohstoffe bzw. die Rohstoffkomponenten, die zur Herstellung der Folie benötigt werden, mit handelsüblichen Industrietrocknern, wie Vakuum- (d.h. unter vermindertem Druck), Wirbelschicht-, Fließbett- oder Festbett-Trockner (Schachttrockner), getrocknet werden können.

Wesentlich ist, daß die erfindungsgemäß eingesetzten Zusatzstoffe nicht ausgasen oder Wandbeläge in den Trocknern bilden, daß die Rohstoffe nicht verkleben und nicht thermisch abgebaut werden. Die genannten Trockner arbeiten im allgemeinen bei normalen Druck mit Temperaturen zwischen 100 und 170 °C.

Bei einem Vakuumtrockner, der die schonendsten Trockenbedingungen erlaubt, durchläuft der Rohstoff einen Temperaturbereich von ca. 30 °C bis 130 °C bei einem vermindertem Druck von 50 mbar. Danach ist ein sogenanntes Nachtrocknen in einem Hopper bei Temperaturen von 100 bis 130 °C und einer Verweilzeit von 3 bis 6 Stunden erforderlich.

Erfindungswesentlich ist, daß das Masterbatch, welches den Hydrolysestabilisator enthält und das Masterbatch, das gegebenenfalls das Flammschutzmittel und gegebenenfalls den UV-Stabilisator enthält, jeweils vorkristallisiert bzw. vorgetrocknet wird. Diese Vortrocknung beinhaltet ein gradielles Erhitzen des Masterbatches unter reduziertem Druck ( 20 bis 80 mbar, vorzugsweise 30 bis 60 mbar, insbesondere 40 bis 50 mbar) und unter Rühren und gegebenenfalls ein Nachtrocknen bei konstanter, erhöhter Temperatur ebenfalls unter reduziertem Druck. Das Masterbatch wird vorzugsweise bei Raumtemperatur aus einem Dosierbehälter in der gewünschten Abmischung zusammen mit den Polymeren der Basis-und/oder Deckschichten und ggf. anderen Rohstoffkomponenten chargenweise in einem Vakuumtrockner, der im Laufe der Trocken- bzw. Verweilzeit ein Temperaturspektrum von 10 °C bis 160°C, vorzugsweise 20°C bis 150°C, insbesondere 30°C bis 130°C durchläuft, gefüllt. Während der ca. 6-stündigen, vorzugsweise 5-stündigen, insbesondere 4-stündigen Verweilzeit wird die Rohstoffmischung mit 10 bis 70 Upm, vorzugsweise 15 bis 65 Upm, insbesondere 20 bis 60 Upm gerührt. Das so vorkristallisierte bzw. vorgetrocknete Rohstoffgemisch wird in einem nachgeschalteten ebenfalls evakuierten Behälter bei 90° bis 180 °C, vorzugsweise 100°C bis 170°C, insbesondere 110°C bis 160°C für 2 bis 8 Stunden, vorzugsweise 3 bis 7 Stunden, insbesondere 4 bis 6 Stunden nachgetrocknet.

Bei der Herstellung einer Folie gemäß der Erfindung wurde festgestellt, daß sich mittels Masterbatch-Technologie, einer geeigneten Vortrocknung bzw. Vorkristallisation des jeweils eingesetzten Masterbatches und gegebenenfalls durch Einsatz von geringen Konzentrationen an Hydrolysestabilisator die Folie ohne Verklebung im Trockner herstellen läßt. Des weiteren wurden keine Ausgasungen und Ablagerungen im Produktionsprozeß gefunden.

Bei der Herstellung der Folie wurde auch festgestellt, daß sie sich hervorragend in Längs- und in Querrichtung ohne Abrisse orientieren läßt.

Die Folien können nach bekannten Verfahren aus einem Thermoplastrohstoff, dem Titandioxid vom Rutiltyp, dem optischen Aufheller, gegebenenfalls dem blauen Farbstoff und mit gegebenfalls weiteren Rohstoffen und/oder weiteren üblichen Additiven in üblicher Menge von 0,1 bis maximal 10,0 Gew.-% sowohl als Monofolien als auch als mehrschichtige, gegebenenfalls coextrudierte Folien mit gleichen oder unterschiedlich ausgebildeten Oberflächen hergestellt werden, wobei eine Oberfläche beispielsweise pigmentiert ist und die andere Oberfläche kein Pigment enthält. Ebenso können eine oder beide Oberflächen der Folie nach bekannten Verfahren mit einer üblichen funktionalen Beschichtung versehen werden.

In der mehrschichtigen Ausführungsform sind das Titandioxid sowie der optische Aufheller und gegebenenfalls der blaue Farbstoff vorzugsweise in der Kernschicht enthalten. Bei Bedarf können auch die Deckschichten ausgerüstet sein.

Anders als in der einschichtigen Ausführungsform bezieht sich hier die Menge an Additiven auf das Gewicht der Thermoplasten in der mit dem/den Additiven ausgerüsteten Schicht

Bei dem bevorzugten Extrusionsverfahren zur Herstellung der Folie werden die Polymere bzw. Rohstoffgemische einem Extruder bzw. bei mehrschichtigen Folien mehreren Extrudern zugeführt. Etwa vorhandene Fremdkörper oder Verunreinigungen lassen sich aus der Polymerschmelze vor der Extrusion abfiltrieren. Die Schmelze(n) werden dann in einer Monodüse bzw. im mehrschichtigen Fall in einer Mehrschichtdüse zu flachen Schmelzefilmen ausgeformt und im mehrschichtigen Fall übereinander geschichtet. Anschließend wird der Monofilm oder der Mehrschichtfilm mit Hilfe einer Kühlwalze abgeschreckt und als weitgehend amorphe, d.h. unorientierte Folie verfestigt. Diese Folie wird anschließend erneut erhitzt und in Längs- und Querrichtung bzw. in Quer- und in Längsrichtung bzw. in Längs-, in Quer- und nochmals in Längsrichtung und/oder Querrichtung gestreckt. Die Strecktemperaturen liegen im allgemeinen bei T_{g} + 10 °C bis T_{g} + 60 °C (T_{g} = Glastemperatur), das Streckverhältnis der Längsstreckung liegt üblicherweise bei 2 bis 6, vorzugsweise bei 2,5 bis 4,5, das der Querstreckung bei 2 bis 5, vorzugsweise bei 3 bis 4,5, und das der gegebenenfalls. durchgeführten zweiten Längsstreckung bei 1,1 bis 3. Die erste Längsstreckung kann gegebenfalls. gleichzeitig mit der Querstreckung (Simultanstreckung) durchgeführt werden. Anschließend folgt die Thermofixierung der Folie bei Ofentemperaturen von 200 bis 280 °C, insbesondere bei 220 bis 270 °C. Anschließend wird die Folie abgekühlt und aufgewickelt.

Bei der Herstellung der Folie gemäß der Erfindung wurde festgestellt, daß sich die Folie prozeßsicher herstellen läßt. Auch wurden keinerlei Ausgasungen im Produktionsprozeß gefunden, was erfindungswesentlich ist.

Bewitterungstests haben ergeben, daß im Falle einer UV-Stabilisierung die erfindungsgemäßen Folien selbst nach hochgerechnet 5 bis 7 Jahren Außenanwendung im allgemeinen keine Vergilbung, keine Versprödung, kein Glanzverlust der Oberfläche, keine Rißbildung an der Oberfläche und keine Verschlechterung der mechanischen Eigenschaften aufweisen.

Durch die überraschende Kombination ausgezeichneter Eigenschaften eignet sich die Folie gemäß der Erfindung hervorragend für eine Vielzahl verschiedener Anwendungen im Innen- und Außenbereich, beispielsweise für Innenraumverkleidungen, für Messebau und Messeartikel, für Displays, für Schilder, für Etiketten, im Laden- und Regalbau, als kurzlebige Werbeschilder, Labels oder anderer Werbeartikel, als Kaschiermedium und für Lebensmittelanwendungen, für medizinische Anwendungen, im Bausektor, fürAußenanwendungen, als Möbelfolie, als Verpackungsfolie oder im Tiefkühlbereich.

In den nachfolgenden Ausführungsbeispielen erfolgt die Messung der einzelnen Eigenschaften gemäß den folgenden Normen bzw. Verfahren.

### DEG-Gehalt/PEG-Gehalt/IPA-Gehalt

Der DEG-/PEG-/IPA-Gehalt wird gaschromatografisch nach Verseifung in methanolischer KOH und Neutralisation mit wäßriger HCI bestimmt.

### Oberflächenglanz

Der Oberflächenglanz wird bei einem Meßwinkel von 20° nach DIN 67530 gemessen.

### Lichttransmission/Transparenz

Unter der Lichttransmission/Transparenz ist das Verhältnis des insgesamt durchgelassenen Lichtes zur einfallenden Lichtmenge zu verstehen. Sie wird mit dem Meßgerät "Hazegard plus" nach ASTM D 1003 gemessen.

### Oberflächendefekte, homogene Einfärbung

Die Oberflächendefekte und die homogene Einfärbung werden visuell bestimmt.

### Mechanische Eigenschaften

Der E-Modul, die Reißfestigkeit und die Reißdehnung werden in Längs- und Querrichtung nach ISO 527-1-2 gemessen.

### SV (DCE), IV (DCE)

Die Standardviskosität SV (DCE) wird in Anlehnung an DIN 53726 in Dichloressigsäure gemessen. Die intrinsische Viskosität (IV) berechnet sich wie folgt aus der Standardviskosität (SV): IV (DCE) = 6,67 • 10⁻⁴ SV (DCE) + 0,118.

### Bewitterung (beidseitig), UV-Stabilität

Die UV-Stabilität wird nach der Testspezifikation ISO 4892 wie folgt geprüft

| | |
|---|---|
| Testgerät | Atlas Ci 65 Weather Ometer |
| Testbedingungen | ISO 4892, d. h. künstliche Bewitterung |
| Bestrahlungszeit | 1000 Stunden (pro Seite) |
| Bestrahlung | 0,5 W/m², 340 nm |
| Temperatur | 63 °C |
| Relative Luftfeuchte | 50 % |
| Xenonlampe | innerer und äußerer Filter aus Borosilikat |
| Bestrahlungszyklen | 102 Minuten UV-Licht, dann 18 Minuten UV-Licht mit Wasserbesprühung der Proben dann wieder 102 Minuten UV-Licht usw. |

### Gelbwert

Der Gelbwert (YID) ist die Abweichung von der Farblosigkeit in Richtung "Gelb" und wird gemäß DIN 6167 gemessen.

### Brandverhalten

Das Brandverhalten wird nach DIN 4102 Teil 2, Baustoffklasse B2 und nach DIN 4102 Teil 1, Baustoffklasse B1 sowie nach dem UL-Test 94 ermittelt.

### Weißgrad

Der Weißgrad wird nach Berger bestimmt, wobei im allgemeinen mehr als 20 Folienlagen aufeinander gelegt werden. Die Bestimmung des Weißgrades erfolgt mit Hilfe des elektrischen Remissionsphotometers ®ELREPHO der Firma Zeiss, Oberkochem (DE), Normlichtart C, 2° Normalbeobachter. Der Weißgrad wird als WG = RY + 3RZ - 3RX definiert. WG = Weißgrad, RY, RZ, RX = entsprechende Reflexionsfaktoren bei Einsatz des Y-, Z- und X-Farbmessfilters. Als Weißstandard wird ein Pressling aus Bariumsulfat (DIN 5033, Teil 9) verwendet. Eine ausführliche Beschreibung ist z.B. in Hansl Loos "Farbmessung", Verlag Beruf und Schule, Itzehoe (1989), beschrieben.

### Oberflächenspannung

Die Oberflächenspannung wurde mittels der sogenannten Tintenmethode (DIN 53364) bestimmt.

### Bestimmung der Siegelanspringtemperatur (Mindestsiegeltemperatur)

Mit dem Siegelgerät HSG/ET der Firma Brugger werden heißgesiegelte Proben (Siegelnaht 20 mm x 100 mm) hergestellt, wobei die Folie bei unterschiedlichen Temperaturen mit Hilfe zweier beheizter Siegelbacken bei einem Siegeldruck von 2 bar und einer Siegeldauer von 0,5 Sekunden gesiegelt wird. Aus den gesiegelten Proben wurden Prüfstreifen von 15 mm Breite geschnitten. Die T-Siegelnahtfestigkeit wurde wie bei der Bestimmung der Siegelnahtfestigkeit gemessen. Die Siegelanspringtemperatur ist die Temperatur, bei der eine Siegelnahtfestigkeit von mindestens 0,5 N/15 mm erreicht wird.

### Siegelnahtfestigkeit

Zur Bestimmung der Siegelnahtfestigkeit werden zwei 15 mm breite Folienstreifen übereinandergelegt und bei 130°C, einer Siegelzeit von 0,5 Sekunden und einem Siegeldruck von 2 bar (Gerät: Brugger Typ NDS, einseitig beheizte Siegelbacke) versiegelt. Die Siegelnahtfestigkeit wird nach der T-Peel-Methode bestimmt.

### Beispiele

Bei nachstehenden Beispielen und Vergleichsbeispielen handelt es sich jeweils um ein- oder mehrschichtige,weiße, biaxial orientierte Folien unterschiedlicher Dicke, die auf der beschriebenen Extrusionsstraße hergestellt werden.

Das Polyethylenterephthalat (Klarrohstoff), aus dem die Folien hergestellt wurden und das Polyethylenterephthalat, das zur Herstellung der Masterbatche verwendet wurde, hatte eine Standardviskosität SV (DCE) von 810, was einer intrinsischen Viskosität von 0,658 dl/g entspricht, sofern nicht anders angegeben.

Alle Folien wurden nach der Testspezifikation ISO 4892 beidseitig je 1000 Stunden pro Seite mit dem Atlas Ci 65 Weather Ometer der Fa. Atlas bewittert und anschließend bezüglich der Thermoformbarkeit, der Verfärbung, der Oberflächendefekte und des Glanzes geprüft.

### Beispiel 1

Es wurde eine 50 µm dicke, weiße Folie hergestellt, die als Hauptbestandteil Polyethylenterephthalat (Typ RT49, KoSa, Deutschland), 6% Titandioxid vom Rutil-Typ (®Tronox RFK2, Kerr McGee, Deutschland), 192 ppm optischen Aufheller (®Hostalux KS, Clariant, Deutschland) sowie 30 ppm blauen Farbstoff ®Sudanblau 2 (BASF, Deutschland) enthielt.

Die Additive Titandioxid, optischer Aufheller und blauer Farbstoff wurden als Masterbatche zugegeben.

Das Masterbatch (1) setzt sich zusammen aus 50% Titandioxid, 0,16% optischem Aufheller sowie 49,84% Klarrohstoff. Das Masterbatch (2) enthält neben Klarrohstoff 1500 ppm blauen Farbstoff.

Vor der Extrusion wurden 12,0 Gew.-% Masterbatch (1), 2,0 Gew-.% Masterbatch (2) sowie 86,0 Gew.-% Klarrohstoff bei einer Temperatur von 150 °C getrocknet und anschließend im Extruder aufgeschmolzen.

Nach der Längs- und vor der Querstreckung wurde die Folie mittels "Reverse gravure-roll coating"-Verfahren mit einer wäßrigen Dispersion beidseitig beschichtet. Die Dispersion enthielt neben Wasser 4,2 Gew.-% hydrophilischen Polyester (5-Na-sulfoisophthalsäurehaltiger PET/IPA-Polyester, Typ SP41, Ticona, USA), 0,15 Gew.-% kolloidales Siliziumdioxid (®Nalco 1060, Deutsche Nalco Chemie, Deutschland) als Antiblockmittel sowie 0,15 Gew.-% Ammoniumcarbonat (Merck, Deutschland) als pH-Puffer. Das Naßantragsgewicht betrug 2 g/m² pro beschichtete Seite. Nach der Querstreckung lag die berechnete Dicke der Beschichtung bei 40 nm.

### Beispiel 2

Es wurde analog Beispiel 1 eine 50µm dicke, beidseitig beschichtete Folie hergestellt. Sie enthielt 12 Gew.-% Masterbatch (1) und 88 Gew.-% Klarrohstoff, aber keinen blauen Farbstoff.

### Beispiel 3

Es wurde eine 50 µm dicke, koextrudierte weiße A-B-A-Folie hergestellt, wobei A für die Deckschichten und B für die Kernschicht steht. Die Rezeptur der 47 µm dicken Kernschicht entsprach der Rezeptur des Beispiels 2. Die 1,5 µm dicken Deckschichten enthielten 93 Gew.-% Klarrohstoff sowie 7 Gew.-% eines Masterbatches, das neben Klarrohstoff 10.000 ppm Siliciumdioxid (®Sylobloc 44 H, Fa. Grace, Deutschland) enthielt. Die Folie wurde auf einer Deckschicht A analog der Rezeptur aus Beispiel 1 einseitig beschichtet. Diese Folie zeichnete sich durch einen hohen Oberflächenglanz aus.

### Beispiel 4

Analog Beispiel 2 wurde eine 50 µm dicke Monofolie hergestellt, die im Unterschied zu Beispiel 2 zusätzlich 0,6 Gew.-% des UV-Stabilisators 2-(4,6-Diphenyl-1,3,5-triazin-2-yl)-5-(hexyl)oxyphenol (®Tinuvin 1577 der Firma Ciba-Geigy) enthielt (Schmelzpunkt 149°C, thermisch stabil bis ca. 330°C), der in Form eines 20,0 Gew.-%igen Masterbatches zugegeben wurde.

### Beispiel 5

Es wurde ein 50 µm dicke, coextrudierte A-B-A-Folie hergestellt.

Die 46 µm dicke Basisschicht B enthielt als Hauptbestandteil PET, 6,0 Gew.-% Titandioxid vom Rutiltyp, 200 ppm optischen Aufheller, 0,2 Gew.-% Hydrolysestabilisator und 4,0 Gew.-% Flammschutzmittel. Die Schicht enthielt weiterhin 30,0 Gew.-% des immanent bei der Folienproduktion anfallenden Eigenregenerates.

Die beiden 2 µm dicken Deckschichten enthielten neben PET 0,1 Gew.-% Sylobloc 44 H als Antiblockmittel.

Das Titandioxid und der optische Aufheller wurden in Form eines Masterbatches zudosiert, das neben PET 50,0 Gew.-% Titandioxid (Rutil-Typ) und 0,16% optischen Aufheller enthielt.

Zwecks homogener Verteilung wurde das Sylobloc 44 H, das im PET nicht löslich ist, beim Rohstoffhersteller in das PET eingearbeitet.

Der Hydrolysestabilisator und das Flammschutzmittel wurden in Form eines Masterbatches zudosiert. Das Masterbatch setzte sich aus 20,0 Gew.-% Flammschutzmittel (Methanphosphonsäure-bis-(5-ethyl-2-methyl-2-oxo-2λ⁵-[1,3,2]dioxaphosphinan-5-ylmethylester)), 1,0 Gew.-% Hydrolysestabilisator (Pentaerythrit-tetrakis-3-(3,5-di-*tert*.-butyl-4-hydroxylphenyl-propionat) und 79,0 Gew.-% PET zusammen.

### Beispiel 6

Analog Beispiel 5 wurde eine 50 µm dicke, A-B-A-Folie hergestellt. Im Unterschied zu Beispiel 5 wurde die Folie nach der Längsstreckung wie in Beispiel 1, jedoch nur einseitig, beschichtet. Nach der Querstreckung lag die berechnete Dicke der Beschichtung bei 40 nm.

### Beispiel 7

Es wurde eine 50 µm dicke, coextrudierte, siegelfähige A-B-C-Folie hergestellt.

Die 48 µm dicke Basisschicht B enthielt als Hauptbestandteil PET, 6,0 Gew.-% Titandioxid (Rutil-Typ, 0,2 µm Teilchendurchmesser, Fa. Kerr McGee), 20 ppm des optischen Aufhellers aus Beispiel 1 sowie 30,0 Gew.-% des immanent bei der Folienproduktion anfallenden Eigenregenerates.

Das Titandioxid und der optische Aufheller wurden über Masterbatch zudosiert. Der Titandioxidgehalt betrug 50 %. Der Gehalt an optischem Aufheller lag bei 0,016 %. Die Restmenge zu 100 % war Klarrohstoff.

Für die 1 µm dicke siegelfähige Deckschicht A wurde als Thermoplast ein Copolyester aus 78 mol-% Ethylenterephthalat und 22 Mol-% Ethylenisophthalat verwendet (hergestellt über das Umesterungsverfahren mit Mn als Umesterungskatalysator, Mn-Konzentration: 100 ppm). Sie enthielt weiterhin 3,0 Gew.-% eines Masterbatches aus 97,75 Gew.-% des genannten Copolyesters, 1,0 Gew.-% Sylobloc 44 H und 1,25 Gew.-% ®Aerosil TT 600 (pyrogenes SiO₂ der Fa. Degussa).

Die 1 µm dicke Deckschicht C enthielt neben PET 3,0 Gew.-% eines Masterbatches aus 97,75 Gew.-% PET, 1,0 Gew.-% Sylobloc 44 H und 1,25 Gew.-% Aerosil TT 600 als Antiblockmittel.

### Beispiel 8

Es wurde analog zu Beispiel 7 eine 50 µm dicke, coextrudierte, siegelfähige A-B-C-Folie hergestellt mit dem Unterschied, daß die nicht siegelfähige Deckschicht C nach der Längsstreckung wie in Beispiel 6 einseitig beschichtet wurde. Nach der Querstreckung lag die berechnete Dicke der Beschichtung bei 40 nm.

### Beispiel 9

Analog Beispiel 7 wurde eine 50 µm dicke, coextrudierte, siegelfähige A-B-C-Folie hergestellt mit dem Unterschied, daß die nicht siegelfähige Deckschicht C coronabehandelt wurde. Die Intensität wurde so gewählt, daß die Oberflächenspannung bei >45 mN/m lag.

### Beispiel 10

Es wurde eine 50 µm dicke Monofolie hergestellt, die analog Beispiel 2 6,0 Gew.-% Titandioxid und 200 ppm optischen Aufheller, analog Beispiel 4 0,6 Gew.-% UV-Stabilisator und analog Beispiel 5 0,2 Gew.-% Hydrolysestabilisator und 4,0 Gew.-% Flammschutzmittel, enthielt. Die Additive wurden entsprechend den Angaben jeweils als Masterbatch zudosiert.

Nach der Längsstreckung wurde die Folie wie in Beispiel 1 beidseitig beschichtet. Nach der Querstreckung lag die berechnete Dicke der Beschichtung bei 40 nm.

### Beispiel 11

Es wurde eine 50 µm dicke A-B-C-Folie hergestellt.

Die Rezeptur der 47 µm dicken Basisschicht B entsprach der Rezeptur der Monofolie aus Beispiel 10, sie enthielt also neben PET Titandioxid, einen optischen Aufheller, einen UV-Stabilisator, ein Flammschutzmittel und einen Hydrolysestabilisator.

Die Rezepturen der 1,5 µm dicken Deckschichten A und C entsprachen den Rezepturen aus Beispiel 7. Analog dem Beispiel 8 wurde die Deckschicht C einseitig beschichtet.

### Vergleichsbeispiel 1

Es wurde eine 50 µm dicke Monofolie hergestellt, die dem Beispiel 2 entsprach. Die Folie enthielt jedoch keinen optischen Aufheller.

### Vergleichsbeispiel 2

Es wurde eine 50 µm dicke weiße Monofolie gemäß Beispiel 2 hergestellt, Sie enthielt neben Klarrohstoff aber 6,0 Gew.-% Titandioxid vom Anatas-Typ (®Hombitan LW-S-U, Sachtleben, Deutschland). Die Folie enthielt jedoch keinen optischen Aufheller.

Die Eigenschaften der hergestellten Folien sind aus der nachstehenden Tabelle zu entnehmen.

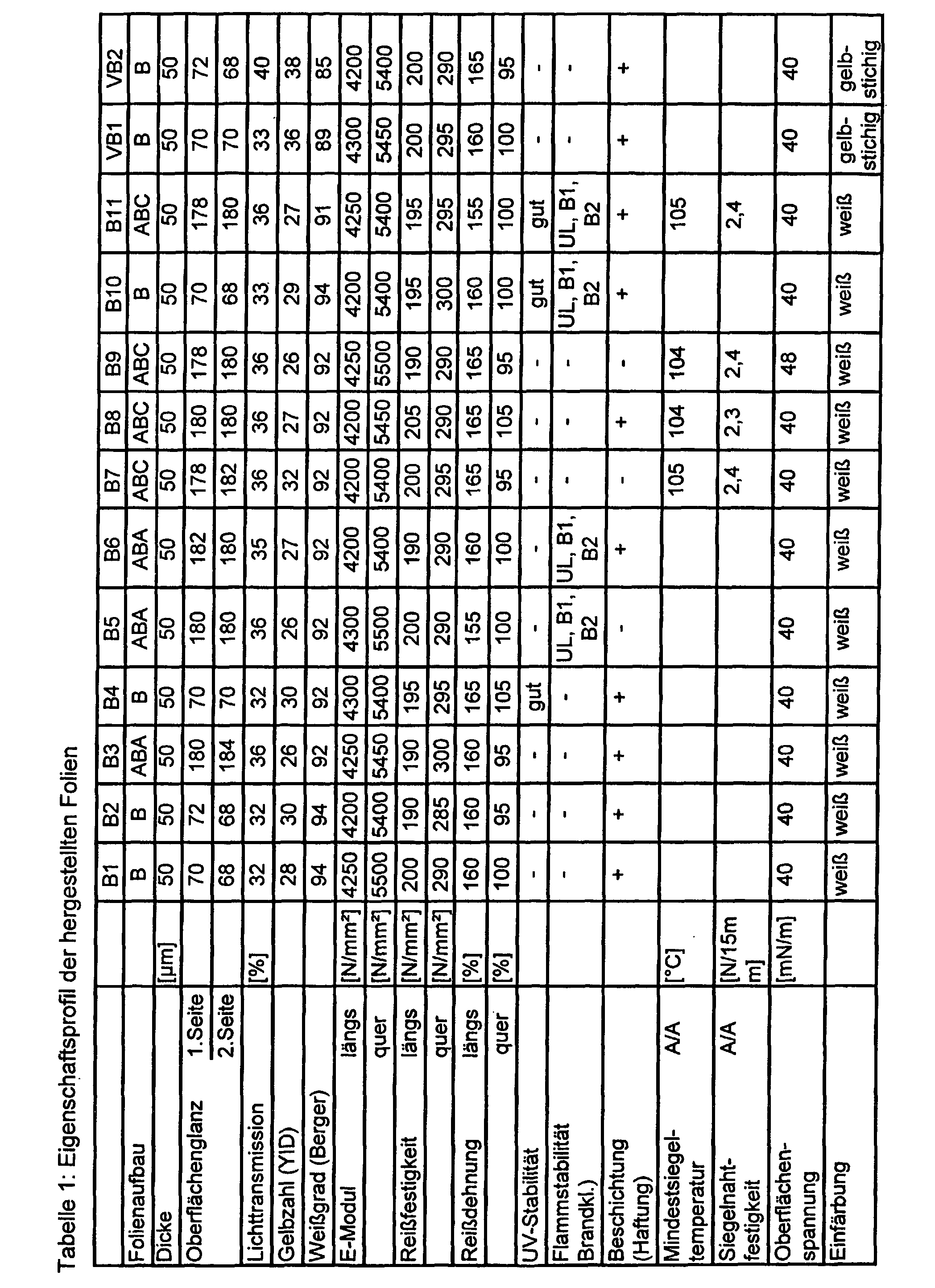

## Patentansprüche

1. Weiße, biaxial orientierte Folie mit einer Dicke im Bereich von 10 bis 500 µm, deren Hauptbestandteil mindestens ein kristallisierbarer Thermoplast ist, **dadurch gekennzeichnet, daß** der kristallisierbare Thermoplast ein Polyethylenterephthalat, Polybutylenterephthalat, Polyethylennaphthalat, bibenzolmodifiziertes Polyethylenterephthalat oder Mischungen daraus ist und einen Diethylenglykolgehalt von ≥ 1,0 Gew.% und/oder einen Polyethylenglykolgehalt von ≥ 1 ,0 Gew.% und/oder ein Isophthalsäuregehalt von 3 bis 10 Gew.-% aufweist und daß die Folie mindestens ein Titandioxid vom Rutil-Typ als Weißpigment und mindestens einen optischen Aufheller in Gegenwart oder Abwesenheit weiterer Zusätze enthält, sowie mit mindestens einer weiteren Funktionalität versehen ist.

2. Folie nach Anspruch 1, **dadurch gekennzeichnet, daß** der kristallisierbare Thermoplast Polyethylenterephthalat oder Polyethylennaphthalat ist und einen Diethylenglykolgehalt von ≥ 1,2 Gew.%, insbesondere ≥1,3 Gew.%, und/oder ein Polyethylenglykolgehalt von ≥1,0 Gew.%, vorzugsweise ≥1,2 Gew.%, insbesondere ≥ 1,3 Gew.% und/oder einen Isophthalsäuregehalt von 3 Gew.-% bis 10 Gew.-% aufweist.

3. Folie nach Anspruch 1 oder 2, **dadurch gekennzeichnet, daß** das Weißpigment in einer Konzentration im Bereich von 2,0 bis 25,0 Gew.-%, vorzugsweise von 2,0 bis 23,0 Gew.-%, insbesondere 3,0 bis 20,0 Gew.-%, bezogen auf das Gewicht des Thermoplasten, enthalten ist.

4. Folie nach einem oder mehreren der Ansprüche 1 bis 3, **dadurch gekennzeichnet, daß** als optischer Aufheller mindestens ein Benzoxazol-, Triazin-, Phenylcumarin- und Bis-sterylbiphenyl-Derivat in Mengen von 10 bis 50.000 ppm, vorzugsweise von 20 bis 30.000 ppm, insbesondere von 50 bis 25.000 ppm, bezogen auf das Gewicht des kristallisierbaren Thermoplasten, enthalten ist.

5. Folie nach einem oder mehreren der Ansprüche 1 bis 4, **dadurch gekennzeichnet, daß** die Folie zur Erzielung mindestens einer weiteren Funktionalität mit einem Flammschutzmittel und/oder mit UV-Stabilisatoren (UV-Absorber) ausgerüstet und/oder siegelfähig und/oder auf einer oder beiden Oberflächen beschichtet und/oder auf einer oder beiden Seiten coronabehandelt und neben dem optischen Aufheller mit einem löslichen Farbstoff versehen ist.

6. Folie nach Anspruch 5, **dadurch gekennzeichnet, daß** die Konzentration des UV-Absorbers im Bereich von 0,01 bis 5,0 Gew.- % vorzugsweise 0,1 bis 3 Gew.-%, die Konzentration des Flammschutzmittels im Bereich von 0,5 bis 30,0 Gew.-%, vorzugsweise von 1,0 bis 20,0 Gew.-% und die Konzentration des löslichen Farbstoffs im Bereich von 10 bis 10.000 ppm, vorzugsweise 20 bis 5.000 ppm, insbesondere 50 bis 1.000 ppm liegt.

7. Folie nach Anspruch 5 oder 6, **dadurch gekennzeichnet, daß** die UV-Absorber als 2-Hydroxybenzophenone, 2-Hydroxybenzotriazole, nickelorganische Verbindungen, Salicylsäureester, Zimtsäureester-Derivate, Resorcinmonobenzoate, Oxalsäureanilide, Hydroxybenzoesäureester, sterisch gehinderte Amine und Triazine, vorzugsweise 2-Hydroxybenzotriazole und Triazine und insbesondere 2-(4,6-Diphenyl-1,3,5-triazin-2-yl)-5-(hexyl)oxyphenol oder 2,2'-Methylen-bis(6-(2H-benzotriazol-2-yl)-4-(1,1,2,2,-tetramethylpropyl)-phenol vorliegen.

8. Folie nach einem oder mehreren der Ansprüche 5 bis 7, **dadurch gekennzeichnet, daß** das Flammschutzmittel als organische Phosphorverbindung, vorzugsweise Carboxyphosphinsäuren, deren Anhydride oder als Alkanphosphonsäureester, bevorzugt als Methanphosphonsäure-bis-(5-ethyl-2-methyl-2-oxo-2λ5-[1,3,2]dioxaphosphinan-5-ylmethylester), vorliegt.

9. Folie nach einem oder mehreren der Ansprüche 1 bis 8, **dadurch gekennzeichnet, daß** ein Hydrolysestabilisator in Form von phenolischen Stabilisatoren, Alkali-/Erdalkalistearaten und/oder Alkali-/Erdalkalicarbonaten in einer Menge von 0,01 bis 1,0 Gew.-%, vorzugsweise phenolische Stabilisatoren in einer Menge von 0,05 bis 0,6 Gew.-%, insbesondere 0,15 bis 0,3 Gew.-% und mit einer Molmasse von mehr als 500 g/mol, enthalten ist.

10. Folie nach einem oder mehreren der Ansprüche 1 bis 9, **dadurch gekennzeichnet, daß** ein Regenerat enthalten ist.

11. Verfahren zur Herstellung einer weißen, biaxial orientierte Folie mit einer Dicke im Bereich von 10 bis 500 µm, deren Hauptbestandteil mindestens ein kristallisierbarer Thermoplast ist, **dadurch gekennzeichnet, daß** der kristallisierbare Thermoplast ein Polyethylenterephthalat, Polybutylenterephthalat, Polyethylennaphthalat, bibenzolmodifiziertes Polyethylenterephthalat oder Mischungen daraus ist und einen Diethylenglykolgehalt von ≥ 1,0 Gew.% und/oder einen Polyethylenglykolgehalt von ≥ 1,0 Gew.% und/oder ein Isophthalsäuregehalt von 3 bis 10 Gew.-% aufweist, mit mindestens einem Titandioxid vom Rutil-Typ als Weißpigment und mindestens einen optischen Aufheller und weiteren, eine Funktionalität verleihenden Substanzen nach einem Extrusionsverfahren zu einem flachen Schmelzefilm ausgeformt, mit Hilfe einer Kühlwalze zu einer weitgehend amorphen Vorfolie abgeschreckt und verfestigt wird, diese Folie anschließend erneut erhitzt und mindestens einmal in Längs- und Querrichtung gestreckt, dann bei Temperaturen von 200 bis 280°C thermofixiert und schließlich abgekühlt und aufgewickelt wird.

12. Verfahren nach Anspruch 11, **dadurch gekennzeichnet, daß** die Folie zur Erzielung mindestens einer weiteren Funktionalität mit einem Flammschutzmittel und/oder mit UV-Stabilisatoren ausgerüstet und/oder mit mindestens einer Siegelschicht ausgerüstet und/oder auf einer oder beiden Oberflächen beschichtet und/oder auf einer oder beiden Seiten coronabehandelt und neben dem optischen Aufheller mit einem löslichen Farbstoff versehen wird.

13. Verfahren nach Anspruch 11 oder 12, **dadurch gekennzeichnet, daß** das Titandioxid vom Rutil-Typ, der optische Aufheller und die weiteren, eine Funktionalität verleihenden Substanzen bei der Folienherstellung in den Extruder zudosiert werden, wobei die Zugabe über die Masterbatch-Technologie bevorzugt ist.

14. Verfahren nach einem oder mehreren der Ansprüche 11 bis 13, **dadurch gekennzeichnet, daß** ein Regenerat eingesetzt wird.

15. Verwendung der Folie nach einem oder mehreren der Ansprüche 1 bis 10 für die Anwendung im Innen- und Außenbereich.

16. Verwendung nach Anspruch 15 für Innenraumverkleidungen, für Messebau und Messeartikel, für Displays, für Schilder, für Etiketten, im Laden- und Regalbau, als kurzlebige Werbeschilder, Labels oder anderer Werbeartikel, als Kaschiermedium und für Lebensmittelanwendungen, für medizinische Anwendungen, im Bausektor, als Möbelfolie, als Verpackungsfolie oder im Tiefkühlbereich.

## Claims

1. A white, biaxially oriented film with a thickness in the range from 10 to 500 µm, whose main constituent is at least one crystallizable thermoplastic, wherein the crystallizable thermoplastic is a polyethylene terephthalate, polybutylene terephthalate, polyethylene naphthalate, bibenzoyl-modified polyethylene terephthalate, or a mixture of these, and has a diethylene glycol content of ≥ 1.0 % by weight, and/or a polyethylene glycol content of ≥ 1.0 % by weight, and/or an isophthalic acid content of from 3 to 10 % by weight, and wherein the film comprises at least one rutile-type titanium dioxide as white pigment and at least one optical brightener, with or without other additives, and also has at least one other functionality.

2. The film as claimed in claim 1, wherein the crystallizable thermoplastic is polyethylene terephthalate or polyethylene naphthalate, and has a diethylene glycol content of ≥ 1.2 % by weight, in particular ≥ 1.3 % by weight, and/or a polyethylene glycol content of ≥ 1.0 % by weight, preferably ≥ 1.2 % by weight, in particular ≥ 1.3 % by weight, and/or an isophthalic acid content of from 3 % by weight to 10 % by weight.

3. The film as claimed in claim 1 or 2, wherein the concentration of the white pigment present is in the range from 2.0 to 25.0 % by weight, preferably from 2.0 to 23.0 % by weight, in particular from 3.0 to 20.0 % by weight, based on the weight of the thermoplastic.

4. The film as claimed in one or more of claims 1 to 3, wherein the optical brightener present comprises at least one benzoxazole derivative, triazine derivative, phenylcoumarin derivative, or bisstearylbiphenyl derivative, in amounts of from 10 to 50 000 ppm, preferably from 20 to 30 000 ppm, in particular from 50 to 25 000 ppm, based on the weight of the crystallizable thermoplastic.

5. The film as claimed in one or more of claims 1 to 4, which has gained at least one other functionality by being provided with a flame retardant and/or with UV stabilizers (UV absorbers), and/or has been coated so as to be sealable, and/or has been coated on one or both surfaces, and/or has been corona-treated on one or both sides, and has been provided with a soluble dye alongside the optical brightener.

6. The film as claimed in claim 5, wherein the concentration of the UV absorber is in the range from 0.01 to 5.0 % by weight, preferably from 0.1 to 3 % by weight, the concentration of the flame retardant is in the range from 0.5 to 30.0 % by weight, preferably from 1.0 to 20.0 % by weight, and the concentration of the soluble dye is in the range from 10 to 10 000 ppm, preferably from 20 to 5000 ppm, in particular from 50 to 1000 ppm.

7. The film as claimed in claim 5 or 6, wherein the UV absorbers present are 2-hydroxybenzophenones, 2-hydroxybenzotriazoles, organonickel compounds, salicylic esters, cinnamic ester derivatives, resorcinol monobenzoates, oxanilides, hydroxybenzoic esters, sterically hindered amines, or triazines, preferably 2-hydroxybenzotriazoles or triazines, or in particular 2-(4,6-diphenyl-1,3,5-triazin-2-yl)-5-hexyloxyphenol or 2,2'-methylenebis(6-(2H-benzotriazol-2-yl)-4-(1,1,2,2-tetramethylpropyl)phenol).

8. The film as claimed in one or more of claims 5 to 7, wherein the flame retardant present is an organic phosphorus compound, preferably carboxyphosphinic acids, or anhydrides of these, or is an ester of an alkanephosphonic acid, preferably bis(5-ethyl-2-methyl-2-oxo-2λ5-[1,3,2]dioxaphosphinan-5-ylmethyl) methanephosphonate.

9. The film as claimed in one or more of claims 1 to 8, wherein a hydrolysis stabilizer is present, in the form of phenolic stabilizers, alkali metal/alkaline earth metal stearates, and/or alkali metal/alkaline earth metal carbonates, in amounts of from 0.01 to 1.0 % by weight, preferably phenolic stabilizers in amounts of from 0.05 to 0.6 % by weight, in particular from 0.15 to 0.3 % by weight and having a molar mass above 500 g/mol.

10. The film as claimed in one or more of claims 1 to 9, wherein regrind is present.

11. A process for producing a white, biaxially oriented film with a thickness in the range from 10 to 500 µm whose main constituent is at least one crystallizable thermoplastic, wherein the crystallizable thermoplastic is a polyethylene terephthalate, polybutylene terephthalate, polyethylene naphthalate, bibenzoyl-modified polyethylene terephthalate, or a mixture of these, and has a diethylene glycol content of ≥ 1.0 % by weight, and/or a polyethylene glycol content of ≥ 1.0 % by weight, and/or an isophthalic acid content of from 3 to 10 % by weight, and is extruded with at least one rutile-type titanium dioxide as white pigment and with at least one optical brightener, and with other substances providing functionality, to give a flat melt film, and is quenched and solidified with the aid of a chill roll to give a substantially amorphous prefilm, and then this film is reheated and stretched at least once longitudinally and transversely, is heat-set at temperatures of from 200 to 280°C, and finally is cooled and wound up.

12. The process as claimed in claim 11, wherein the film is given at least one other functionality by being provided with a flame retardant and/or with UV stabilizers and/or with at least one sealable layer, and/or by being coated on one or both surfaces, and/or by being corona-treated on one or both sides, and has a soluble dye alongside the optical brightener.

13. The process as claimed in claim 11 or 12, wherein the film is produced by metering the rutile-type titanium dioxide, the optical brightener, and the other substances providing functionality into the extruder, the addition preferably taking place by way of masterbatch technology.

14. The process as claimed in one or more of claims 11 to 13, wherein use is made of regrind.

15. The use of the film as claimed in one or more of claims 1 to 10 for indoor or outdoor applications.

16. The use as claimed in claim 15 for interior coverings, for constructing exhibition stands, for exhibition requisites, as displays, for placards, for labels, for the fitting out of shops or of stores, as short-lived advertising placards, labels, or other promotional items, as a laminating medium, or for food or drink applications, for medical applications, in the construction sector, as a furniture film, as a packaging film, or in the deep-freeze sector.

## Revendications

1. Feuille blanche, à orientation bi-axiale, ayant une épaisseur dans le domaine de 10 à 500 µm, dont le constituant principal est au moins un thermoplastique cristallisable, **caractérisée en ce que** le thermoplastique cristallisable est un polytéréphtalate d'éthylène, un polytéréphtalate de butylène, un polynaphtalate d'éthylène, un polytéréphtalate d'éthylène modifié par dibenzène ou leurs mélanges et présente une teneur en diéthylèneglycol ≥ 1,0 % en poids et/ou une teneur en polyéthylèneglycol > 1,0 % en poids et/ou une teneur en acide isophtalique de 3 à 10 % en poids et **en ce que** la feuille contient au moins un dioxyde de titane du type rutile en tant que pigment blanc et au moins un azureur optique en présence ou en absence d'additifs supplémentaires, et est pourvue d'au moins une fonctionnalité supplémentaire.

2. Feuille selon la revendication 1, **caractérisée en ce que** le thermoplastique cristallisable est un polytéréphtalate d'éthylène ou un polynaphtalate d'éthylène et présente une teneur en diéthylèneglycol ≥ 1,2 % en poids, en particulier ≥ 1,3 % en poids et/ou une teneur en polyéthylèneglycol ≥ 1,0 % en poids, de préférence ≥ 1,2 % en poids, en particulier ≥ 1,3 % en poids et/ou une teneur en acide isophtalique de 3 % en poids à 10 % en poids.

3. Feuille selon la revendication 1 ou 2, **caractérisée en ce que** le pigment blanc est contenu dans une concentration dans le domaine de 2,0 à 25,0 % en poids, de préférence de 2,0 à 23,0 % en poids, en particulier de 3,0 à 20,0 % en poids, par rapport au poids du thermoplastique.

4. Feuille selon l'une quelconque ou plusieurs des revendications 1 à 3, **caractérisée en ce qu'**en tant qu'azureur optique est contenu au moins un dérivé du benzoxazole, de la triazine, de la phénylcoumarine et du bis-stérylbiphényle, dans des quantités de 10 à 50 000 ppm, de préférence de 20 à 30 000 ppm, en particulier de 50 à 25 000 ppm, par rapport au poids du thermoplastique cristallisable.

5. Feuille selon l'une quelconque ou plusieurs des revendications 1 à 4, **caractérisée en ce que** la feuille est pourvue, en vue de l'obtention d'au moins une fonctionnalité supplémentaire, d'un agent ignifuge et/ou d'agents stabilisateurs vis-à-vis des rayons UV (agent absorbeur des UV) et/ou est capable d'être scellée et/ou est revêtue sur une face ou sur les deux faces et/ou est soumise à un traitement couronne sur une face ou sur les deux faces et est pourvue, outre de l'azureur optique, d'un colorant soluble.

6. Feuille selon la revendication 5, **caractérisée en ce que** la concentration de l'agent absorbeur des UV se situe dans le domaine de 0,01 à 5,0 % en poids, de préférence de 0,1 à 3 % en poids, **en ce que** la concentration de l'agent ignifuge se situe dans le domaine de 0,5 à 30,0 % en poids, de préférence de 1,0 à 20,0 % en poids et **en ce que** la concentration du colorant soluble se situe dans le domaine de 10 à 10 000 ppm, de préférence de 20 à 5 000 ppm, en particulier de 50 à 1 000 ppm.

7. Feuille selon la revendication 5 ou 6, **caractérisée en ce que** les agents absorbeurs des rayons UV sont présents sous la forme de 2-hydroxybenzophénone, de 2-hydroxybenzotriazole, de composés organo-nickel, d'esters de l'acide salicylique, de dérivés de l'acide cinnamique, du mono benzoate de résorcine, d'anilides de l'acide oxalique, d'esters de l'acide hydroxybenzoïque, d'amines et de triazines à encombrement stérique, de préférence de 2-hydroxybenzotriazole et de triazines et, en particulier, de 2-(4,6-diphényl-1,3,5-triazin-2-yl)-5-(hexyl)oxyphénol ou de 2,2'-méthylèn-bis(6-(2H-benzotriazol-2-yl)-4-(1,1,2,2-tétraméthylpropyl)-phénol.

8. Feuille selon l'une quelconque ou plusieurs des revendications 5 à 7, **caractérisée en ce que** l'agent ignifuge est présent en tant que composé du phosphore organique, de préférence en tant qu'acides carboxy phosphiniques, leurs anhydrides ou en tant qu'esters d'acides alcanephosphoniques, de préférence en tant qu'ester bis-(5-éthyl-2-méthyl-2-oxo-2λ5-[1,3,2]dioxaphosphinan-5-ylméthylique) de l'acide méthanephosphonique.

9. Feuille selon l'une quelconque ou plusieurs des revendications 1 à 8, **caractérisée en ce qu'**un agent stabilisateur de l'hydrolyse est contenu sous la forme d'agents stabilisateurs phénoliques, et/ou de carbonates alcalins/alcalinoterreux et/ou de stéarates alcalins/alcalino-terreux, dans une quantité de 0,01 à 1,0 % en poids, de préférence sous la forme d'agents stabilisateurs phénoliques dans une quantité de 0,05 à 0,6 % en poids, en particulier de 0,15 à 0,3 % en poids et avec une masse molaire de plus de 500 g/mole.

10. Procédé selon l'une quelconque ou plusieurs des revendications 1 à 9, **caractérisé en ce qu'**un produit de régénération y est contenu.

11. Procédé en vue de la fabrication d'une feuille blanche, à orientation bi-axiale, ayant une épaisseur dans le domaine de 10 à 500 µm, dont le constituant principal est au moins un thermoplastique cristallisable, **caractérisé en ce que** le thermoplastique cristallisable est un polytéréphtalate d'éthylène, un polytéréphtalate de butylène, un polynaphtalate d'éthylène, un polytéréphtalate d'éthylène modifié par dibenzène ou leurs mélanges et présente une teneur en diéthylèneglycol ≥ 1,0 % en poids et/ou une teneur en polyéthylèneglycol ≥ 1,0 % en poids et/ou une teneur en acide isophtalique de 3 à 10 % en poids, avec au moins un dioxyde de titane du type rutile en tant que pigment blanc et avec au moins un azureur optique et des substances supplémentaires, conférant une fonctionnalité, conformément à un procédé d'extrusion, la feuille étant formée pour obtenir un film fondu plat, étant soumise à une trempe à l'aide d'un rouleau de refroidissement pour donner une feuille type précurseur, essentiellement amorphe, et subissant un durcissement, cette feuille étant, par la suite, à nouveau échauffée et étant étirée au moins une fois dans les directions longitudinale et transversale, étant alors fixée par voie thermique à des températures de 200 à 280°C et étant finalement refroidie et enroulée.

12. Procédé selon la revendication 11, **caractérisé en ce que** la feuille est pourvue, en vue de l'obtention d'au moins une fonctionnalité supplémentaire, d'un agent ignifuge et/ou d'agents stabilisateurs vis-à-vis des rayons UV et/ou est revêtue d'une couche de scellement et/ou est revêtue sur une face ou sur les deux faces et/ou est soumise à un traitement couronne sur une face ou sur les deux faces et est pourvue, outre de l'azureur optique, d'un colorant soluble.

13. Procédé selon la revendication 11 ou 12, **caractérisé en ce que** le dioxyde de titane du type rutile, l'azureur optique et les substances supplémentaires conférant une fonctionnalité, sont ajoutés par dosage lors de la fabrication de la feuille dans l'extrudeuse, l'addition se faisant de manière préférée par la technologie dite mélange maître.

14. Procédé selon l'une quelconque ou plusieurs des revendications 11 à 13, **caractérisé en ce que** l'on utilise un produit de régénération.

15. Utilisation de la feuille selon l'une quelconque ou plusieurs des revendications 1 à 10 pour l'application dans le domaine intérieur et extérieur.

16. Utilisation selon la revendication 15 pour les habillages de locaux intérieurs, pour la construction d'expositions et les articles d'expositions, pour les affichages, pour les enseignes, pour les étiquettes, dans la construction de magasins et de rayonnage, en tant qu'affiches publicitaires, labels et autres articles de publicité temporaires, en tant que milieu de masquage et pour des applications relatives aux produits alimentaires, pour des applications médicales, dans le secteur de la construction, en tant que feuilles pour meubles, en tant que feuille d'emballage ou dans le domaine de la congélation.
